# EUROPÄISCHE PATENTSCHRIFT

(11) **EP 0 595 397 B1**
(45) Veröffentlichungstag und Bekanntmachung des Hinweises auf die Patenterteilung: **06.05.1998**
(21) Anmeldenummer: 93202926.7
(22) Anmeldetag: 20.10.1993
(51) Int. Cl.: G11B 33/02, G11B 25/06, G11B 31/00, B29C 45/14

(54) **Technisches Gerät, insbesondere elektromechanisches Laufwerk zum Bewegen von Informationsträgern**
Technical apparatus, particularly electromechanical drive for information carriers
Appareil technique, notamment dispositif d'entraînement électromécanique pour entraîner des supports d'information

(30) Priorität: 27.10.1992 DE 4236179
(43) Veröffentlichungstag der Anmeldung: 04.05.1994
(73) Patentinhaber: Philips Patentverwaltung GmbH, 22335 Hamburg (DE); Philips Electronics N.V., 5621 BA Eindhoven (NL)
(72) Erfinder: Kämmler, Georg, D-20097 Hamburg (DE); Platzer, Herbert, NL-5613 CC Eindhoven (NL)
(74) Vertreter: von Laue, Hanns-Ulrich, Dipl.-Ing.

(56) Entgegenhaltungen:
- EP-A- 0 516 208
- EP-A- 0 530 919
- DE-A- 3 911 746
- PATENT ABSTRACTS OF JAPAN vol. 007 no. 047 (M-196) ,24.Februar 1983 & JP-A-57 197139 (HITACHI SEISAKUSHO KK) 3.Dezember 1982,
- PATENT ABSTRACTS OF JAPAN vol. 007 no. 261 (M-257) ,19.November 1983 & JP-A-58 142822 (NITSUSEI JIYUSHI KOGYO KK) 25.August 1983,
- PATENT ABSTRACTS OF JAPAN vol. 007 no. 110 (M-214) ,13.Mai 1983 & JP-A-58 030556 (HITACHI SEISAKUSHO KK) 23.Februar 1983,

## Beschreibung

Die Erfindung bezieht sich auf ein technisches Gerät, insbesondere elektromechanisches Laufwerk zum Bewegen von Informationsträgern mit wenigstens einem an einer Grundplatte gebildeten Kunststoffunktionsteil, das in Outsert-Moulding-Technik an die Grundplatte angespritzt ist, das aus wenigstens einem einen Durchbruch der Grundplatte durchgreifenden Steg und an den Grundplattenoberflächen befindlichen Haltestücken besteht, die der Steg verbindet und dessen Kunststoff nach dem Spritzgießen schrumpft.

Technische Geräte, bei denen tragende Metallplatten mit angespritzten Kunststoffteilen versehen sind, sind bekannt. Die Fertigungstechnik derartiger tragender Metallplatten ist unter dem Namen Outsert-Moulding-Technik bekannt. Die an der tragenden Metallplatte gebildeten Funktionsteile dienen den verschiedensten Zwecken, wie der Halterung, der Lagerung oder der Führung weiterer Funktionsteile. Die Verbindungstechnik zwischen den aufgespritzten Funktionsteilen und der tragenden Metallplatte besteht immer darin, daß ein Durchbruch in der Metallplatte derart umspritzt wird, daß beiderseits der Plattendurchbrüche gebildete Kunststoffhaltestücke mittels eines den Durchbruch durchgreifenden Steges miteinander verbunden sind. Infolge der unvermeidlichen Schrumpfung des Kunststoffes nach dem Spritzen zieht der sich verkürzende Steg die Haltestücke von beiden Plattenoberflächen an diese heran. Damit kommt ein verhältnismäßig fester Sitz zustande, der gerade noch ein Verdrehen in eine gewünschte Lage ermöglicht, der aber nicht mit einer Lagerausbildung vergleichbar ist, bei der sich die Teile während des Betriebes ständig bewegen, beispielsweise drehen oder verschieben.

Es ist aus der DE 39 11 746 C2 (PHD 89-053) bekannt, eine einem Dreh- oder Schiebelager gleichkommende Beweglichkeit durch eine Deformation der Aufspritzung nach dem Spritzprozeß herbeizuführen.

Aus der JP-OS 57-197139 ist es bekannt, zwischen den Formhohlraum für ein Haltestück der beschriebenen Art und die zugehörige Plattenoberfläche ein Abstandsstück zu fügen, welches beim Spritzvorgang sehr sorgfältig und sicher festgehalten werden muß. Nach dem Abspritzvorgang wird dieses Abstandsstück entfernt, womit das aufgespritzte Teil lagerfähig wird. Das Einfügen, Festhalten und spätere Entfernen des Abstandsstückes ist für eine Massenfertigung zu aufwendig.

Es ist auch bereits vorgeschlagen worden, durch eine Variation der Dicke der Haltestücke eine unterschiedliche Schrumpfkraft und damit eine mehr oder weniger bewegliche Verankerungen in den entsprechenden Lagerpunkten zu erreichen. Diese Verankerungen sind jedoch nicht leichtgängig genug, um damit Hebel- oder Zahnradlager zu gestalten. Außerdem können die Haltestücke rund um den Durchbruch in der Metallplatte nicht beliebig dünn gemacht werden, da in diesen Fällen die Füllung des Durchbruchs mit dem Steg und der daran befestigten Haltestücke beim Spritzgießen nicht mehr gewährleistet ist. Auch die mechanische Festigkeit einer Anbindung von Funktionsteilen an sehr dünne Haltestücke ist nicht ausreichend groß.

Es ist Aufgabe der Erfindung, bei einem Laufwerk eines technischen Gerätes an einer Grundplatte in Outsert-Moulding-Technik gebildete Funktionsteile beim Spritzvorgang so zu gestalten, daß sie eine während des Betriebes benötigte Drehbeweglichkeit oder Verschiebemöglichkeit bieten bei ausreichend starker Ausbildung der Haltestücke und bei Einsparung eines nachträglichen Bearbeitungsvorganges.

Die gestellte Aufgabe ist erfindungsgemäß dadurch gelöst, daß sich das Funktionsteil durch das Schrumpfen als Schieber oder Drehteil selbsttätig freibeweglich macht durch folgende Gestaltung:
die Haltestücke greifen nur an Umfangsteilbereichen der axialen Stegenden an und sind dabei so gegeneinander versetzt, daß bei sich überdeckenden Umfangsteilbereichen des Steges ein Stegende an der einen Plattenoberfläche immer nur ein Haltestück trägt und das im Überdeckungsbereich befindliche andere Stegende an der anderen Plattenoberfläche frei von Haltestücken ist.

Bei einer derartigen Ausbildung des Funktionsteiles im Rahmen des Abspritzvorganges hat dieses nach dem Freischrumpfen noch eine derartige Beweglichkeit, daß es während des Gerätebetriebes nach Belieben frei beweglich oder verschieblich ist. Ein Festschrumpfen in axialer Richtung ist nicht möglich.

Nach einer weiteren Ausgestaltung der Erfindung ist vorgesehen, daß beim Einsatz von jeweils einem Haltestück an jeder der Plattenoberflächen diese diametral gegeneinander versetzt sind. Die jeweils frei bleibenden Umfangsteilbereiche sind dabei so groß, daß die Freibeweglichkeit ohne Bedenken gegeben ist.

Nach einer weiteren Ausgestaltung der Erfindung ist vorgesehen, daß die Wandbreite des hülsenförmig ausgebildeten Steg zwischen seiner Innenwand und seiner Außenwand so bemessen ist, daß der Steg infolge seiner Schrumpfung nach dem Spritzen ein gewünschtes radiales Lagerspiel zwischen der Innenwand des Durchbruches in der Grundplatte und der Außenwand ausbildet, wobei in Weiterbildung der Erfindung das Lagerspiel auf ca. 50 bis 100 µm bemessen ist.

Beim Schrumpfen und dem damit verbundenen Verkürzen des Steges hat das Funktionsteil mit seinen Haltestücken die Tendenz, in dem Durchbruch der Metallplatte leicht zu verkippen. Dieses Verkippen stört je nach dem Einsatzzweck des Funktionsteiles nicht, da sein Ausmaß außerordentlich geringfügig ist.

Wenn das leichte Verkippen des Lagers aber als störend empfunden wird, dann kann dem nach einer weiteren Ausgestaltung der Erfindung damit begegnet werden, daß an wenigstens einem der Haltestücke an der zu diesen gehörenden Plattenoberfläche ein Stützarm vorgesehen ist, der sich außerhalb des Durchbruches um diesen herum, an der Plattenoberfläche anliegend etwa bis in den Überdeckungsbereich des Haltelstückes an der anderen Plattenoberfläche erstreckt. Ein solcher Stützarm kann nach einer weiteren Ausgestaltung der Erfindung derart verbessert werden, daß er zu einer Stützschleife erweitert ist, deren Enden am Haltestück angreifen und die vom Haltestück aus den Durchbruch mit Abstand umschließt.

Die Erfindung ist sowohl für Drehlager als auch Schiebelager geeignet, wobei immer nur darauf geachtet werden muß, daß ausreichend große Umfangsteilbereiche des Steges an den Plattenoberflächen frei sind von Haltestücken.

Die Erfindung wird anhand der Zeichnung näher erläutert. Es zeigen:
Fig. 1 ein technisches Gerät, insbesondere ein Autoradio mit einem Laufwerk für bandförmige Informationsträger, geöffnet und in schaubildlicher Darstellung,
Fig. 2 im Schnitt eine Metallplatte mit einem in Outsert-Moulding-Technik angespritzten Funktionsteil, das nach dem Anspritzen an die Grundplatte an dieser drehbeweglich ist,
Fig. 3 das Funktionsteil der Darstellung nach Fig. 2 in Draufsicht,
Fig. 4 das Funktionsteil nach Fig. 2 mit einem veränderten Stützarm,
Fig. 5 das Funktionsteil in der Ausbildung als Schieber, der nach dem Anspritzen an die Grundplatte an dieser schiebebeweglich ist,
Fig. 6 das Funktionsteil nach Fig. 5 im Schnitt längs der Linie VI-VI nach Fig. 5.

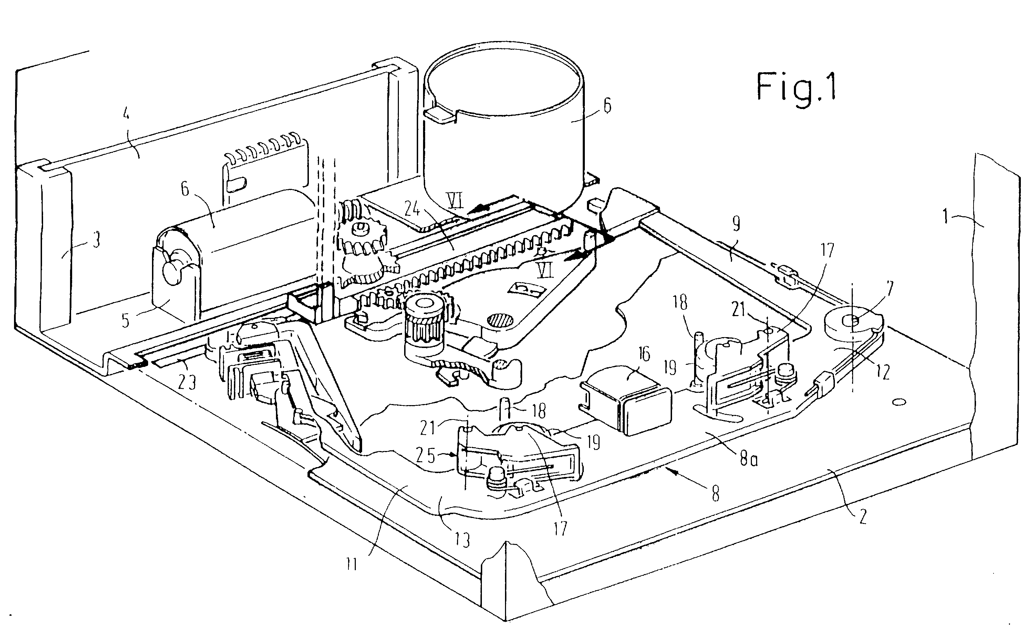

Fig. 1 zeigt aus einem Gerät 1, beispielsweise einem Autoradio, die Grundplatte 2 eines Magnetbandkassettenlaufwerkes, an die in Outsert-Moulding-Technik Funktionsteile 3 und 5, beispielsweise zum Tragen einer Schaltungsplatte 4 zum Lagern eines Motors 6, angespritzt sind. Als Kunststoff kommt dabei vorzugsweise teilkristalliner thermoplastischer Kunststoff in Betracht, dessen Schrumpfung ohne Füllstoff in der Größenordnung von 1% bis 3% liegt. Durch eine Beimischung von Füllstoff läßt sich die Schwindung weiter reduzieren. Dies hat zum einen den Vorteil, daß man die Stegbreite vergrößern kann. Zum anderen wird das Kippen reduziert. Um eine Lagerachse 7 ist eine Kopfplatte 8 verschwenkbar, an der Schenkel 9 und 11 in Eckbereichen 12 und 13 angreifen. Das Basisteil 8a der Kopfplatte 8 trägt einen Magnetkopf 16 und über Halterungen 17 mit Tonwellen 18 zusammenwirkende Andruckrollen 19.

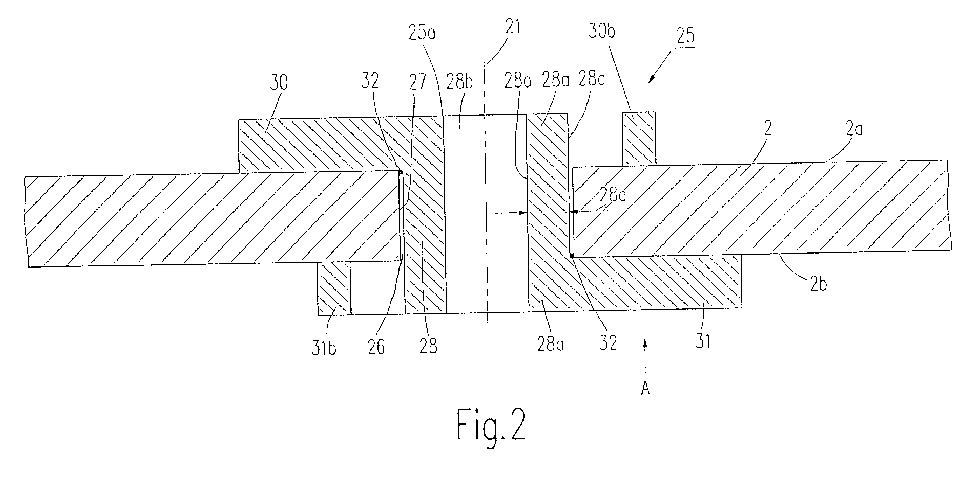

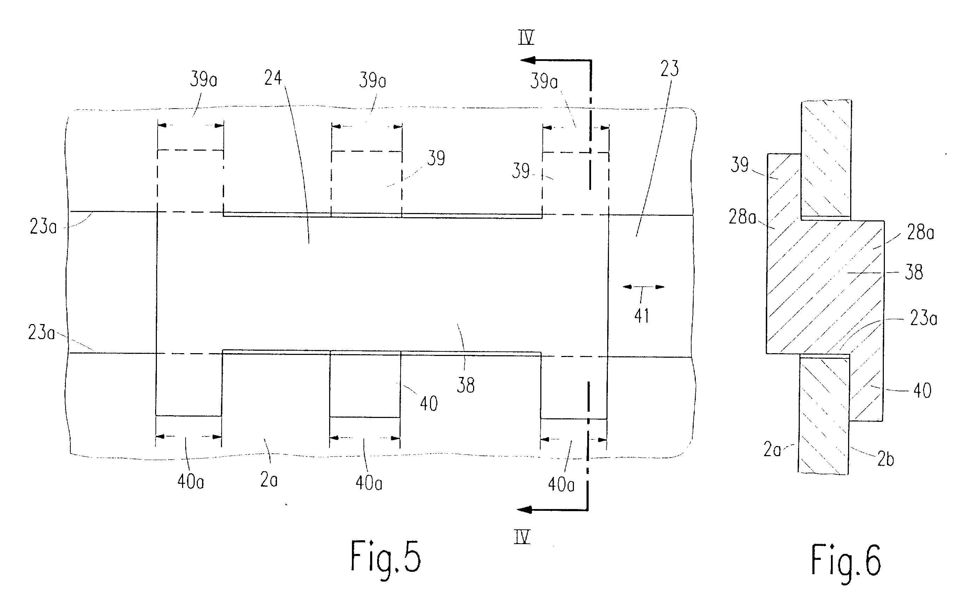

Die Halterungen 17 sind um Achsen 21 verschwenkbar. Die dazu eingesetzte Lagerausbildung ist in den Fig. 2 bis 4 ausführlich beschrieben. In der Grundplatte 2 ist ein Längsschlitz 23 vorgesehen, in dem ein Schieber 24 verschieblich ist. Die Lagerung dieses Schiebers 24 ist in Fig. 5 näher beschrieben.

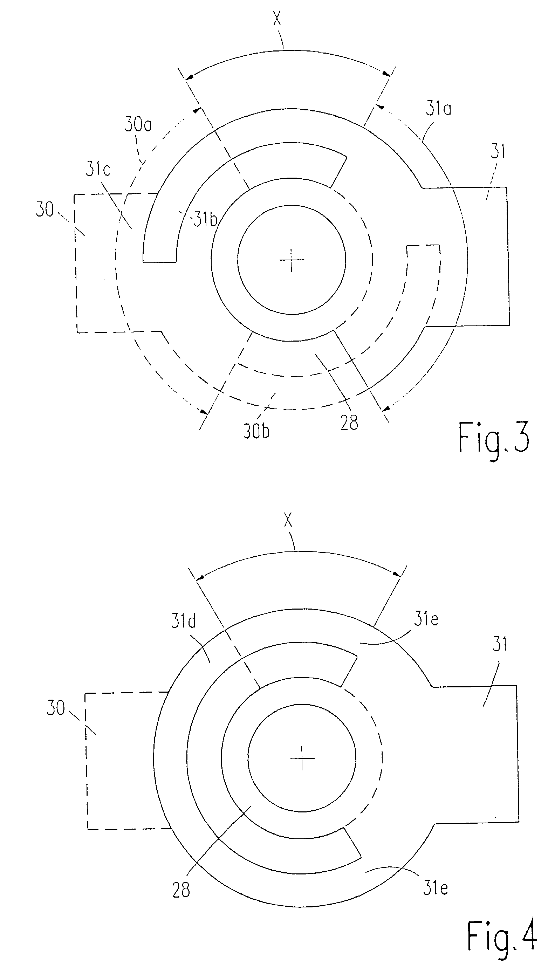

Fig. 2 zeigt im Schnitt ein Drehlager 25 der Halterung 17 mit der Achse 21. Den ortsfesten Bestandteil des Lagers 25 bildet die metallische Grundplatte 2 mit einem in ihr vorgesehenen Durchbruch 26. Den bewewglichen Bestandteil des Lagers 25 bildet ein in Spritzgießtechnik gebildetes Kunststoff-Funktionsteil 25a. Der Durchbruch 26 ist bei dem Drehlager 25 kreisrund ausgebildet; er hat eine Innenwand 27. Die metallische Grundplatte 2 ist in einem Outsert-Moulding-Spritzvorgang so mit Kunststoff umspritzt, daß sich durch den Durchbruch 26 ein Steg 28 des Funktionsteiles 25a erstreckt. An den Plattenoberflächen 2a und 2b greifen an den axialen Stegenden 28a Haltestücke 30 und 31 des Funktionsteiles 25a an. Ein Haltestück 30 befindet sich dabei an der Plattenoberfläche 2a und ein Haltestück 31 an der Plattenoberfläche 2b. Die Haltestücke 30, 31 greifen nur an Umfangsteilbereichen 30a und 31a des Steges 28 bzw. der axialen Stegenden 28a an und sind dabei so gegeneinander versetzt, daß bei achsparallel überdeckenden Umfangsteilbereichen 30a oben und unten sowie 31a oben und unten immer nur ein Stegende 28a an einer Plattenoberfläche 2a oder 2b ein Haltestück trägt und der Teilbereich an der anderen Plattenoberfläche 2b bzw. 2a frei von Haltestücken 30, 31 ist. Dies geht wiederum deutlich aus Fig. 3 hervor, die eine Ansicht A von Fig. 2 zeigt. Es gibt einen Winkelbereich x, in dem das Stegteil 28 völlig frei von Haltestücken 30 oder 31 ist.

Die Freiheit von Haltestücken im Umfangsteilbereich und der gegenseitige Versatz der Haltestücke im Bereich achsparallel überdeckender Umfangsteilbereiche 30a, 31a führt dazu, daß nach dem Freischrumpfen des Lagers 25, das die Halterung 17 trägt, ohne Nachbehandlung eine Freibeweglichkeit vorhanden ist. Die Freibeweglichkeit ist so groß, daß sie von Anfang an und für die Lebensdauer des Laufwerkes vorhanden ist.

In den Fig. 2 bis 4 befinden sich die Haltestücke 30 und 31 diametral auseinanderlaufend an der einen Plattenoberfläche 2a und an der anderen Plattenoberfläche 2b. Bei einer deutlichen Verkürzung der Umfangsteilbereiche 30a und 31a ist es auch möglich, anstelle von zwei Haltestücken 30 und 31 vier Haltestücke einzusetzen, die längs des Umfanges des Stegs 28 abwechselnd an der einen Plattenoberfläche 2a, 2b und an der anderen Plattenoberfläche 2b, 2a vorgesehen sind.

Der Steg 28 kann massiv ausgebildet sein. Für eine gezielte Schrumpfung ist es jedoch vorteilhaft, wenn der Steg 28 hülsenförmig ausgebildet ist mit einem Hohlraum 28b. Der Steg 28 hat damit eine Außenwand 28c, die beim Spritzen den gleichen Durchmesser hat wie die Innenwand 27 des Loches 26 der Metallplatte 2. Die Wandbreite 28e des hülsenförmig ausgebildeten Steges 28 zwischen seiner Innenwand 28d und seiner Außenwand 28c ist dabei so bemessen, daß der Steg 28 infolge seiner Freischrumpfung nach dem Abspritzen ein gewünschtes Lagerspiel zwischen der Innenwand 27 des Durchbruches 26 in der Grundplatte 2 und der Außenwand 28c des Steges ausbildet. Das Lagerspiel soll dabei vorzugsweise zwischen 50 und 100 µm bemessen sein.

Durch das Schrumpfen des Steges 28 in axialer Richtung kann es zu einer leichten Verkantung des drehbaren Funktionsteiles 25a in Druckpunkten 32 kommen. Um diesem Verkanten entgegenzuwirken, sind, wie Fig. 2 und 3 zeigen, an den Haltestücken 30 und/oder 31 Stützarme 30b, 31b vorgesehen. Der Stützarm 31b erstreckt sich dabei außerhalb des Durchbruches 26 um diesen herum, liegt an der Metallplattenoberfläche 2b an und erstreckt sich bis in den Überdeckungsbereich 31c mit dem Haltestück 30. Ist ein Stützarm 30b vorgesehen, dann erstreckt sich dieser in gleicher Weise außerhalb des Durchbruches 26 um diesen herum, liegt an der Plattenoberfläche 2a an und erstreckt sich bis in den Überdeckungsbereich mit dem Haltestück 31 an der anderen Plattenoberfläche 2b. Auf Weise wird einem Verkippen des drehbaren Lagerteiles 28, 30, 31 entgegengewirkt, ohne daß die Drehbeweglichkeit beeinträchtigt wird.

Fig. 4 zeigt eine abgeänderte Ausbildung, bei der der Stützarm 31b zu einer Stützschleife 31d erweitert ist, deren Enden 31e am Haltestück 31 angreifen und die vom Haltestück 31 aus den Durchbruch 26 mit Abstand umschließt.

Während die Fig. 2 bis 4 Drehlager 25 beschreiben, zeigt Fig. 5 eine Ausbildung eines Schieberlagers 24. Dabei wirkt als verschiebbares Funktionsteil der Schieber 24.

Der ortsfeste Bestandteil des Schieberlagers ist der Schlitz 23 in der Grundplatte 2, in dem der Schieber 24 längsverschieblich ist. Die Schieberanordnung nach Fig. 5 ist in Fig. 6 anhand des Schnittes VI-VI in Fig. 5 geschnitten dargestellt. Wie bei der Drehlagerausbildung nach den Fig. 2 bis 4 besteht der Schieber 24 aus einem in diesem Fall mehr leistenförmigen Steg 38 und Haltestücken 39 bzw. 40. Die Haltestücke 39 überdecken die Schlitzränder 23a senkrecht zur Verschieberichtung 41 auf der einen Plattenoberfläche 2a und die Haltestücke 40 überdecken die Plattenoberfläche 2b ebenfalls senkrecht zur Verschieberichtung . Die Haltestücke 39 und 40 überdecken sich gegenseitig nicht, weil die Umfangsteilbereiche 39a und 40a, in denen die Haltestücke 39, 40 mit dem Steg 38 verbunden sind, senkrecht zum Schieber 24 immer nur im Bereich des einen oder des anderen Schlitzrandes 23a angeordnet sind. Auf diese Weise erfolgt nach der Schrumpfung des Steges 38 senkrecht zum Schlitz 23 keine Verklemmung des Schiebers 24 am Schlitz.

## Patentansprüche

1. Technisches Gerät, insbesondere elektromechanisches Laufwerk zum Bewegen von Informationsträgern, mit wenigstens einem an einer Grundplatte gebildeten Kunststoffunktionsteil (24, 25a), das in Outsert-Moulding-Technik an die Grundplatte (2) angespritzt ist, das aus wenigstens einem einen Durchbruch (23, 26) der Grundplatte (2) durchgreifenden Steg (28, 38) und an den Grundplattenoberflächen (2a, 2b) befindlichen Haltestücken (30, 31, 39, 40) besteht, die der Steg (28, 38) verbindet und dessen Kunststoff nach dem Spritzgießen schrumpft, wobei das Funktionsteil (24, 25a) als Schieber oder Drehteil frei beweglich ist, dadurch gekennzeichnet, daß das Funktionsteil (24, 25a) nach dem Schrumpfen als Schieber oder Drehteil selbsttätig freibeweglich ist durch folgende Gestaltung:
die Haltestücke (30, 31, 39, 40) greifen nur an Umfangsteilbereichen (30a, 31a, 39a, 40a) der axialen Stegenden (28a) an und sind dabei so gegeneinander versetzt, daß bei sich überdeckenden Umfangsteilbereichen (30a, 31a, 39a, 40a) des Steges (28, 38) ein Stegende (28a) an der einen Plattenoberfläche (2a, 2b) immer nur ein Haltestück (30 oder 31) trägt und das im Überdeckungsbereich befindliche andere Stegende (28a) an der anderen Plattenoberfläche (2b, 2a) frei von Haltestücken (30, 31, 39, 40) ist.

2. Technisches Gerät nach Anspruch 1, dadurch gekennzeichnet, daß beim Einsatz von jeweils einem Haltestück (30, 31) an jeder der Plattenoberflächen (2a, 2b) diese diametral gegeneinander versetzt sind.

3. Technisches Gerät nach Anspruch 1 oder 2, dadurch gekennzeichnet, daß die Wandbreite (28e) des Stegteiles (28) zwischen seiner Innenwand (28d) und seiner Außenwand (28c) so bemessen ist, daß der Steg infolge seiner Schrumpfung nach dem Spritzen ein gewünschtes Lagerspiel zwischen der Innenwand (27) des Durchbruches in der Grundplatte (2) und der Außenwand (28c) ausbildet.

4. Technisches Gerät nach Anspruch 3, dadurch gekennzeichnet, daß das Lagerspiel auf ca. 50 bis 100 µm bemessen ist.

5. Technisches Gerät nach einem der Ansprüche 1 bis 4, dadurch gekennzeichnet, daß an wenigstens einem der Haltestücke (30, 31) an der zu diesem gehörenden Plattenoberflächen (2a, 2b) ein Stützarm (30b, 31b) vorgesehen ist, der sich außerhalb des Durchbruches (26) um diesen herum erstreckt und an dieser anliegend etwa bis in den Überdeckungsbereich (30a, 31a) des Haltestückes (30, 31) an der anderen Plattenoberfläche (2a, 2b) erstreckt.

6. Technisches Gerät nach Anspruch 5, dadurch gekennzeichnet, daß der Stützarm (30a, 31a) zu einer Stützschleife (31d) erweitert ist, deren Enden (31d) am Haltestück (30, 31) angreifen und die vom Haltestück (30, 31) aus den Durchbruch (26) mit Abstand umschließt.

## Claims

1. A technical apparatus, particularly an electromechanical deck for moving information carriers, the apparatus comprising at least one plastics function part (24a, 25a) formed on a deck plate (2), which part has been moulded onto the deck plate (2) by outsert-moulding and comprises at least one bridge element (28, 38), which traverses a hole (23, 26) in the deck plate (2), and retaining elements (30, 31, 39, 40), which are situated at the deck plate surfaces (2a, 2b) and are interconnected by the bridge element (28, 38), the plastics of said part being subject to shrinkage after injection-moulding, the function part (24, 25a) being freely movable as a rotatable or slidable part, characterized in that the mobility of the function part (24a, 25a) as a rotatable or slidable part is obtained automatically after shrinkage by means of the following construction:
the retaining elements (30, 31, 39, 40) are connected to the axial ends (28a) of the bridge element only in circumferential zones (30a, 31a, 39a, 40a) and are offset relative to one another in such a manner that, when the circumferential zones (30a, 31a, 39a, 40a) of bridge element (28, 38) overlap, only one bridge end (28a) at one plate surface (2a, 2b) carries a retaining element (30 or 31) and the other bridge end (28a) at the other plate surface (2b, 2a) situated in the area of overlap is free of retaining elements (30, 31, 39, 40).

2. A technical apparatus as claimed in Claim 1, characterized in that, when each time one retaining element (30, 31) is used at each of the plate surfaces (2a, 2b), said retaining elements are disposed diametrically opposite one another.

3. A technical apparatus as claimed in Claim 1 or 2, characterized in that the wall thickness (28a) of the bridge element (28) between its inner wall (28d) and its outer wall (28c) is dimensioned in such a manner that a desired clearance between the inner wall (27) of the hole in the deck plate (2) and the outer wall (28c) of the bridge element is obtained as a result of shrinkage of the bridge element after moulding.

4. A technical apparatus as claimed in Claim 3, characterized in that the clearance is dimensioned to be approximately 50 to 100 µm.

5. A technical apparatus as claimed in any one of the Claims 1 to 4, characterized in that a supporting arm (30b, 31b) is provided on at least one of the retaining elements (30, 31) at the associated plate surface, which arm is disposed around and spaced from the hole (26), lies against said plate surface, and extends into the area (30a, 31a) of overlap with the retaining element (30, 31) at the other plate surface (2a, 2b).

6. A technical apparatus as claimed in Claim 5, characterized in that the supporting arm (30a, 31a) is extended to form a supporting loop (31d) whose ends (31e) are connected to the retaining element (30, 31) and which surrounds and is spaced from the hole (26), starting from the retaining element (30, 31).

## Revendications

1. Appareil technique, en particulier mécanisme d'entraînement électromécanique en vue de l'entraînement de supports d'information, avec au moins une pièce fonctionnelle en plastique (24, 25a) formée sur une plaque de base qui est appliquée par injection sur la plaque de base (2) dans une technique d"'outsert moulding", qui se compose d'au moins une traverse (28, 38) traversant une ouverture (23, 26) de la plaque de base (2) et de pièces de retenue (30, 31, 39, 40) se trouvant contre les surfaces de la plaque de base (2a, 2b) qui sont reliées par la traverse (28, 38) et dont le plastique se retire après le coulage par injection, la pièce fonctionnelle (24, 25a) pouvant se déplacer librement comme un tiroir ou une pièce rotative, caractérisé en ce que la pièce fonctionnelle (24, 25a) est d'elle-même mobile librement et automatiquement après le retrait sous forme de tiroir ou de pièce rotative par la conception suivante :
les pièces de retenue (30, 31, 39, 40) ne sont appliquées que contre les zones partielles périphériques (30a, 31a, 39a, 40a) des extrémités axiales (28a) de la traverse et sont dès lors décalées l'une par rapport à l'autre de telle sorte que, lorsque les zones partielles périphériques (30a, 31a, 39a, 40a) de la traverse (28, 38) se recouvrent, une extrémité de la traverse (28a) sur l'une des surfaces de la plaque (2a, 2b) ne porte toujours qu'une seule pièce de retenue (30 ou 31) et l'autre extrémité de la traverse (28a) se trouvant dans la zone de chevauchement est exempte de toutes pièces de retenue (30, 31, 39, 40) contre l'autre surface de la plaque (2b, 2a).

2. Appareil technique selon la revendication 1, caractérisé en ce que lors de l'utilisation de pièces de retenue (30, 31) sur chacune des surfaces de la plaque (2a, 2b), celles-ci sont diamétralement opposées l'une à l'autre.

3. Appareil technique selon l'une des revendications 1 ou 2, caractérisé en ce que la largeur de paroi (28e) de la partie de traverse (28) entre sa paroi interne (28d) et sa paroi externe (28c) est dimensionnée de telle sorte que la traverse forme un jeu de palier souhaité entre la paroi interne (27) de l'ouverture dans la plaque de base (2) et la paroi externe (28c) en raison de son retrait après l'injection.

4. Appareil technique selon la revendication 3, caractérisé en ce que le jeu de palier est dimensionné à environ 50 à 100 µm.

5. Appareil technique selon l'une des revendications 1 à 4, caractérisé en ce qu'un bras d'appui (30b, 31b) qui s'étend en dehors de l'ouverture (26) autour de celle-ci et appliqué contre celle-ci environ jusqu'à la zone de recouvrement (30a, 31a) de la pièce de retenue (30, 31) sur l'autre surface de la plaque (2a, 2b) est prévu sur au moins une des pièces de retenue (30, 31) sur les surfaces de plaque (2a, 2b) appartenant à celle-ci.

6. Appareil technique selon la revendication 5, caractérisé en ce que le bras d'appui (30a, 31a) est étendu en une boucle d'appui (31d) dont les extrémités (31d) sont appliquées contre la pièce de retenue (30, 31) et qui renferme à distance l'ouverture (26) à partir de la pièce de retenue (30, 31).
